# FASCICULE DE BREVET EUROPEEN

(11) **EP 2 397 056 B1**
(45) Date de publication et mention de la délivrance du brevet: **05.06.2013**
(21) Numéro de dépôt: 10172301.3
(22) Date de dépôt: 29.05.2008
(51) Int. Cl.: A47J 31/54

(54) **Ensemble pour machine de préparation de boissons comprenant une chaudière**
Kit für Getränkezubereitungsmaschine, die einen Heizkessel umfasst
Assembly for a beverage-preparation machine including a boiler

(30) Priorité: 04.06.2007 FR 0755444
(43) Date de publication de la demande: 21.12.2011
(62) Demande divisionnaire de: 08802888.1
(73) Titulaire: Compagnie Méditerranéenne des Cafés, 06510 Carros (FR)
(72) Inventeur: Blanc, Jean-Pierre, 06000 NICE (FR); Goering, Alain, 06000 NICE (FR)
(74) Mandataire: Hautier, Nicolas

(56) Documents cités:
- EP-A- 0 243 539
- WO-A1-2006/102980
- WO-A2-2011/135539

## Description

La présente invention concerne un dispositif de production de boissons par infusion d'un liquide chaud tel que de l'eau chaude.

L'invention s'appliquera notamment à des machines à café permettant la production de café à partir de café moulu, par exemple mais non limitativement conditionné dans des doses individuelles. L'invention trouve plus particulièrement son application dans le domaine des machines à café de type ESPRESSO. Elle pourra également s'appliquer à la production de boissons à partir d'autres matières telles que le thé.

Un dispositif de production de boissons par infusion présente généralement un circuit d'eau passant par une chaudière de sorte à porter l'eau à température d'infusion (par exemple autour de 100°C), une pompe pour opérer une extraction de la matière à infuser sous pression et une chambre d'infusion au sein de laquelle la matière à infuser est placée et au travers de laquelle circule l'eau chaude sous pression, Voir par example EP-A-0243539.

Une chaudière conventionnelle comprend un ensemble dans lequel sont intégrés un système résistif chauffant et un circuit d'eau. Ce type de chaudière nécessite ainsi d'être connecté à un circuit électrique et à un circuit d'eau.

Au cours des cycles d'utilisation de la machine, des dépôts notamment calcaires s'accumulent dans le circuit d'eau. Ces dépôts amoindrissent irrémédiablement les performances de la machines jusqu'à en empêcher tout fonctionnement. Il est connu qu'il est possible de détartrer les circuits d'eau avec des produits alcalins appropriés, et il est malheureusement laissé à la discrétion du grand public d'utiliser des produits nocifs qui sont difficiles et dangereux à manipuler et qui demandent un rinçage abondant sans maîtrise des rejets de rinçage.

Il convient par conséquent de régulièrement démonter la chaudière et de la nettoyer ou de la remplacer par une chaudière propre. Ces opérations de réparation ou de maintenance obligent l'utilisateur à renvoyer la machine chez un spécialiste. Cette immobilisation de la machine peut entraîner pour l'utilisateur un désagrément certain, doublé d'un manque à gagner significatif dans le cas de l'exploitation professionnelle de la machine

Or, le montage et le démontage des chaudières actuelles s'avèrent malaisés et fastidieux. Il en résulte une longue immobilisation de la machine en cas de réparation ou d'entretien. Par ailleurs, ces difficultés de montage et de démontage entraînent des coûts de fabrication et de maintenance importants.

La présente invention permet de limiter les inconvénients des chaudières connues et permet, en particulier, de faciliter la maintenance et la réparation des chaudières par des professionnels spécialisés garantissant leur pérennité ou par les utilisateurs eux-mêmes.

Pour atteindre cet objectif, il est prévu selon l'invention un ensemble pour machine de préparation de boissons par infusion d'un liquide comportant un support, une chaudière, destiné à chauffer le liquide en vue de la production de boissons, des moyens d'assemblage agencés de manière à permettre sélectivement une solidarisation et une désolidarisation amovible de la chaudière sur le support, des premiers moyens de communication fluidique solidaires de la chaudière et des deuxièmes moyens de communication fluidique solidaires d'un circuit d'arrivée de fluide et/ou d'un circuit de sortie de fluide, les premiers et deuxièmes moyens de communication fluidique étant agencés pour coopérer afin d'assurer une communication fluidique entre la chaudière et un circuit d'arrivée de fluide et/ou un circuit de sortie de fluide, l'ensemble étant agencé de manière à ce que la solidarisation et la désolidarisation entre la chaudière et le support respectivement entraîne et supprime la coopération des premiers et des deuxièmes moyens de communication fluidique. L'ensemble est en outre **caractérisé en ce qu**'il comprend des premiers et des deuxièmes moyens de connexion électrique liés respectivement à la chaudière et à une source d'alimentation électrique et aptes à coopérer mutuellement pour alimenter la chaudière en électricité, et en ce que la solidarisation et la désolidarisation de la chaudière sur le support respectivement entraîne et supprime la coopération entre les premiers et les deuxièmes moyens de connexion électrique,

Ainsi, la solidarisation de la chaudière sur le support de la machine, la mise en communication de la chaudière avec les circuits d'eau et la connexion électrique sont effectuées simultanément et résultent d'étapes communes. De même, la désolidarisation entre la chaudière et le support ainsi que la suppression de la communication fluidique et de la connexion électrique entre la chaudière et les circuits d'eau sont effectuées simultanément et résultent d'étapes communes.

Ainsi, l'invention permet d'assurer une solidarisation de la chaudière sur le support, une mise en communication fluidique de la chaudière avec les circuits d'arrivée et d'évacuation de l'eau et une connexion électrique de la chaudière à une source d'alimentation, en effectuant des étapes simples, rapides et ne nécessitant ni outillage, ni élément d'assemblage rapporté.

L'invention permet donc un montage et un démontage de la chaudière significativement simplifiés par rapport aux machines existantes.

Elle permet par conséquent à un utilisateur d'effectuer lui-même les opérations de montage et de démontage de la chaudière. Il n'est alors plus nécessaire de renvoyer l'ensemble de la machine à un spécialiste en cas de maintenance, seule la chaudière devant être renvoyée. L'utilisateur peut ainsi prévoir de disposer d'une chaudière de rechange qu'il montera lui-même sur la machine après avoir démonté une première chaudière nécessitant un entretien.

L'immobilisation de la machine peut donc être limitée aux simples étapes de montage et de démontage effectuées par l'utilisateur lui-même.

Par ailleurs, les frais d'entretien et de transport de la chaudière à nettoyer sont par conséquent également réduits puisqu'ils concernent principalement la chaudière et non l'ensemble de la machine.

En outre, l'invention permet de réduire sensiblement les temps et les coûts de production et de maintenance.

Le système selon l'invention pourra en outre présenter au moins facultativement l'une quelconque des caractéristiques suivantes :
- il est agencé de manière à ce que la coopération mutuelle entre les premiers et les deuxièmes moyens de communication fluidique soit obtenue par un emmanchement à force des premiers moyens de communication fluidique par rapport aux deuxièmes moyens de communication fluidique,
- il est agencé de manière à ce que ladite solidarisation entre la chaudière et le support soit obtenue en imposant à la chaudière un premier mouvement de translation par rapport au support, puis un deuxième mouvement de rotation par rapport au support,

- Il est agencé de manière à ce que le deuxième mouvement de rotation s'effectue selon un axe sensiblement vertical,
- Il est agencé de manière à ce que le deuxième mouvement de rotation s'effectue selon un axe horizontal,
- le support comprend un châssis et un arbre monté à rotation par rapport au châssis et agencé de manière à être solidarisé de manière amovible avec la chaudière,
- les deuxièmes moyens de communication fluidique sont portés par l'arbre, et en ce que l'arbre accueille une partie du circuit d'arrivée et/ou de sortie d'eau,
- le support est agencé de manière à empêcher toute suppression de la communication entre les premiers et les deuxièmes moyens de communication, lorsque la solidarisation entre la chaudière et le support est établie,
- l'arbre porte une butée d'arrêt en translation agencée de manière à assurer le positionnement adéquat de la chaudière par rapport à l'arbre, et en ce que la butée porte les deuxièmes moyens de connexion,

En outre, il est prévu selon l'invention une chaudière pour machine de préparation de boissons par infusion d'un liquide, comportant :
- des moyens d'assemblage agencés pour permettre une solidarisation amovible entre la chaudière et un support fixé à la machine,
- des premiers moyens de communication fluidique agencés pour permettre une communication fluidique entre la chaudière et un circuit d'arrivée de fluide et/ou un circuit de sortie de fluide porté par la machine,
- agencée de manière à ce que sa solidarisation et sa désolidarisation sur la machine respectivement entraîne et supprime ladite communication fluidique.

Par ailleurs, on prévoit une machine de production de boissons selon l'une quelconque des revendications précédentes.

Un autre objet de la présente invention concerne un procédé d'assemblage entre la chaudière et le support. Les premiers moyens de communication fluidique comprennent des organes mâles portés par la chaudière et les deuxièmes moyens de communication fluidique comprennent des organes femelles portés par le support. L'ensemble comprend également des moyens d'encliquetage qui assurent un contact ferme et étanche entre les organes mâles et femelles. La chaudière et le support sont agencés de manière à ce que leur assemblage mutuel soit obtenu en effectuant les étapes suivantes :
- on dispose une face inférieure de la chaudière au droit d'une ouverture pratiquée dans le support,
- on insère par translation la chaudière à travers l'ouverture jusqu'à ce qu'à ce que les moyens d'encliquetage assurent la solidarisation de la chaudière sur le support et un contact ferme entre les organes mâles et les organes femelles correspondant.

Les dessins ci-joints sont donnés à titre d'exemples et ne sont pas limitatifs de l'invention. Ils représentent seulement des exemples de réalisation de l'invention et permettront de la comprendre aisément.
- la figure 1 est une vue en perspective d'un premier exemple de réalisation de l'invention, la chaudière et le support n'étant pas mutuellement solidarisés,
- la figure 2 est une vue en perspective de la chaudière de l'exemple de réalisation de la figure 1,
- les figures, 3, 4 et 5 sont des vues en perspective de l'exemple de réalisation de l'invention de la figure 1 au cours des différentes phases de solidarisation entre la chaudière et le support,
- les figures 6 et 7 sont des vues en perspective respectivement du dessus et du dessous de l'ensemble selon l'exemple de la figure 1, la chaudière et le support étant mutuellement solidarisés,
- la figure 8 est une vue en perspective d'un deuxième exemple de réalisation de l'invention, la chaudière et le support n'étant pas mutuellement solidarisés,
- les figures 9 à 12 sont des vues en perspective de l'exemple de réalisation de l'invention de la figure 8 au cours des différentes phases d'assemblage de la chaudière dans le support.

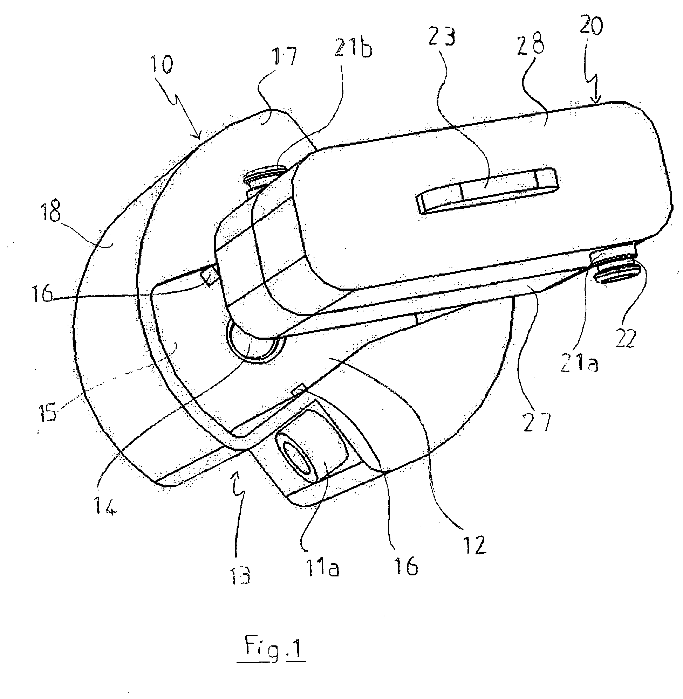

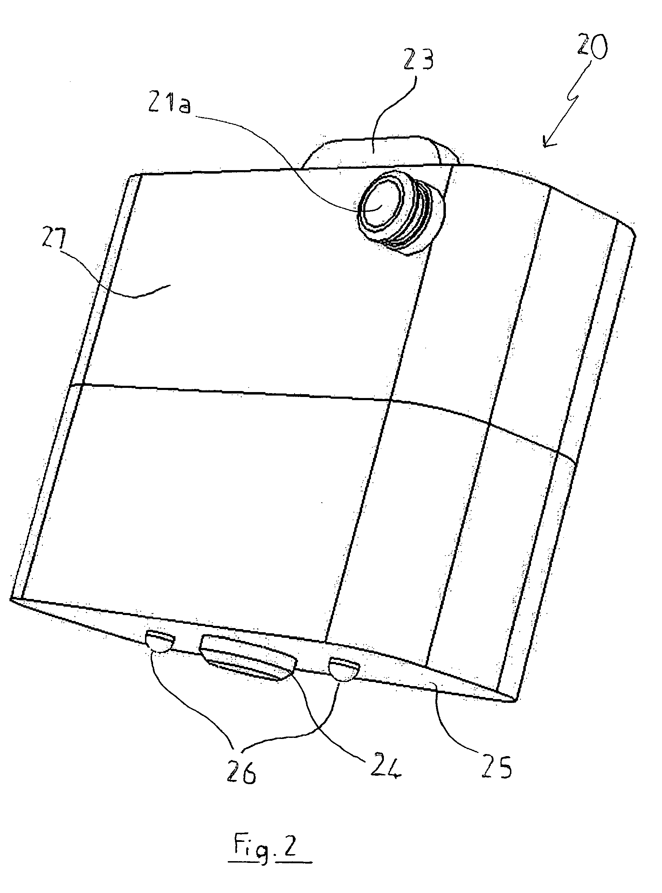

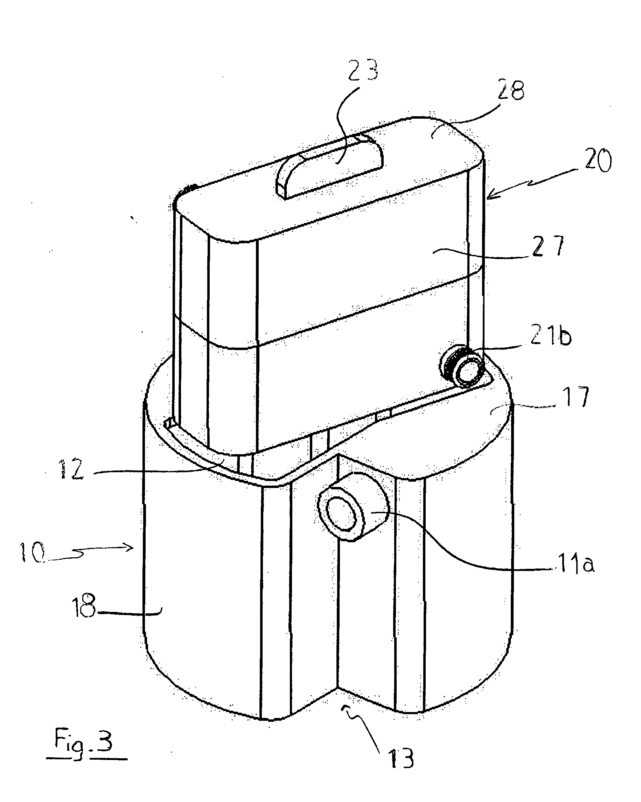

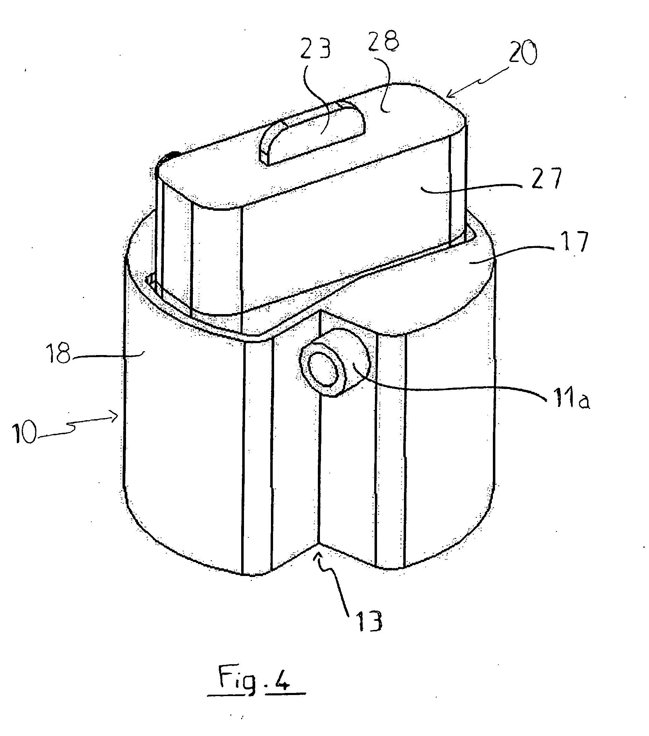

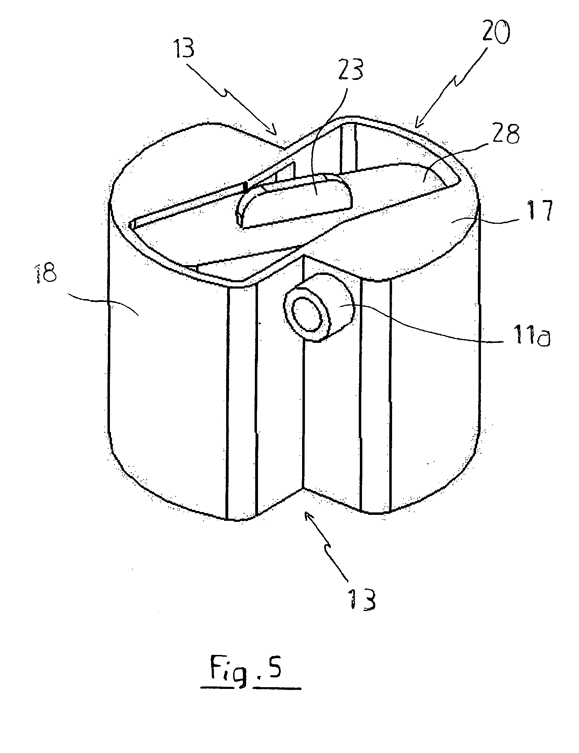

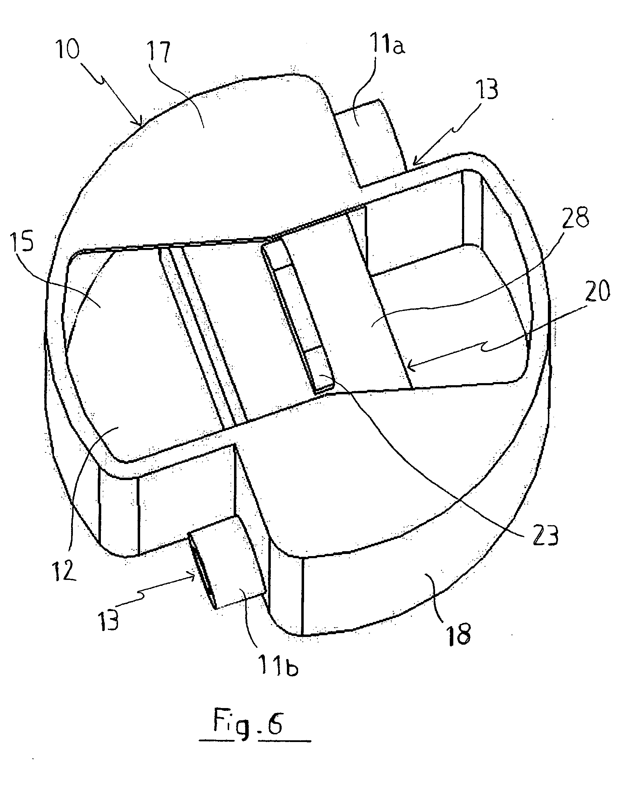

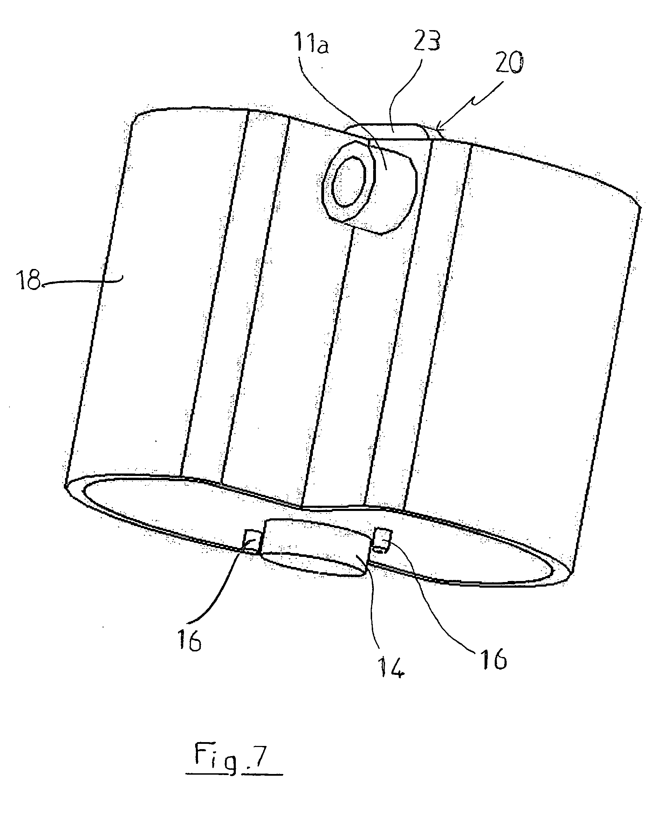

En référence aux figures 1 à 7, on a illustré un ensemble de préparations de boissons selon un premier exemple de réalisation de l'invention.

L'ensemble comporte une chaudière 20 et un support 10.

La chaudière 20 comporte un corps comprenant une face inférieure 25, une face supérieure 28 et des faces latérales 27. La face inférieure 25 est sensiblement plane et horizontale et fait office de fond 15 pour la chaudière 20. La face supérieure 28 est sensiblement parallèle à la face inférieure 25. Les faces latérales 27 s'étendent de la face inférieure 25 à la face supérieure 28, de manière à donner au corps une forme générale sensiblement parallélépipédique dont les angles formés par des faces latérales 27 contiguës sont arrondis. Le corps définit ainsi un volume intérieur faisant office de chambre de chauffage.

La chaudière 20 comprend également des moyens de chauffage liés au corps et aptes à rentrer au contact d'un liquide tel que de l'eau situé dans la chambre de chauffage.

La chaudière 20 comprend également des premiers moyens de communication. Ces premiers moyens de communication comprennent des organes mâles 21a, 21b aptes à coopérer respectivement avec des organes femelles 11a, 11b portés par le support 10. Comme cela sera précisé plus en détail par la suite, l'un de ces organes mâles 21a est destiné à assurer une communication fluidique entre la chambre et un circuit d'entrée assurant l'arrivée d'eau dans la chambre, l'autre de ces organes mâles 21b étant destiné à assurer une communication fluidique entre la chambre et un circuit de sortie assurant l'évacuation de l'eau hors de la chambre.

Les organes mâles 21a, 21b sont disposés sur les parois latérales 18 et forment chacun une protubérance s'étendant depuis les parois latérales 18 dans une direction tangentielle par rapport à un axe vertical passant par le milieu des faces inférieures et supérieures. Cet axe est désigné par la suite axe de chaudière 20.

La chaudière 20 comporte également une poignée 23 disposée sur sa face supérieure 28 et destinée à faciliter la préhension de la chaudière 20 par un utilisateur.

Le support 10 constitue lui-même un bâti de la machine ou peut être rapporté sur ce dernier.

Le support 10 comporte des parois latérales 18 conférant à ce dernier une forme généralement cylindrique définissant un axe de support 10.

Le support 10 comporte également un fond 15 ainsi qu'un couvercle 17 s'étendant tous deux dans des plans horizontaux en extrémité respectivement inférieure et supérieure des parois latérales 18.

Le support 10 définit ainsi un volume intérieur formant un logement.

Le couvercle 17 présente une ouverture 12 dont les dimensions permettent l'insertion de la chaudière 20 dans le support 10 par translation verticale. Par ailleurs, ces dimensions permettent un certain guidage de la chaudière 20 par rapport au support 10 lors de cette translation.

Par ailleurs, les dimensions relatives entre la chaudière 20 et le support 10 sont telles que l'ensemble de la chaudière 20 à l'exception d'une partie au moins de la poignée 23 puisse être contenu dans le logement.

L'ensemble comporte des moyens de guidage en rotation de la chaudière 20 par rapport au support 10. Ces moyens de guidage comprennent un élément mâle 24 porté par la chaudière 20 et un élément femelle 14 complémentaire de l'élément mâle 24 porté par le support 10. L'élément mâle 24 forme sur la face inférieure 25 de la chaudière 20 une protubérance de forme généralement circulaire centrée sur l'axe de chaudière 20. L'élément femelle 14 définit dans le fond 15 du support 10 un évidement circulaire centré sur l'axe de support 10.

Lorsque la chaudière 20 est insérée dans le support 10, les éléments mâles et femelles entrent mutuellement en prise et les axes de chaudière 20 et de support 10 coïncident pour définir un axe commun. Dans cette position, les éléments mâles 24 et femelles 14 coopèrent pour assurer un guidage en rotation de la chaudière 20 par rapport au support 10 selon cet axe commun.

Ainsi, le mouvement de rotation s'effectue autour d'un axe sensiblement parallèle à la direction autour de laquelle est effectué le mouvement de translation.

Les parois latérales 18 du support 10 présentent deux discontinuités définissant chacune un renfoncement 13 s'étendant depuis la périphérie du cylindre vers l'intérieur de ce dernier. Ces deux renfoncements 13 forment ainsi chacun une protubérance dans le logement. Ces deux renfoncements 13 sont disposés de manière sensiblement symétrique l'un par rapport à l'autre selon l'axe de support 10.

Chacune de ces protubérances est agencée de manière à former pour la chaudière 20 une butée de fin de course en rotation selon l'axe commun.

Dans l'exemple présenté, chaque renfoncement 13 présente respectivement deux surfaces sensiblement planes et verticales s'étendant depuis le fond 15 jusqu'au couvercle 17. Ces deux surfaces sont contiguës et forment un angle sensiblement droit dirigé vers l'intérieur du logement. Pour chacun de ces renfoncements 13, une première surface constitue une butée de fin de course s'opposant à la rotation de la chaudière 20 par rapport au support 10 dans un sens dit de désencliquetage lorsque la chaudière 20 est insérée dans le logement.

Pour chacun de ces renfoncements 13, une deuxième surface porte des deuxièmes moyens de communication établissant chacun une communication entre l'intérieur et l'extérieur du logement. Ces deuxièmes moyens de communication sont aptes à coopérer d'une part avec un circuit d'entrée ou de sortie d'eau et à coopérer d'autre part avec les premiers moyens de communication de la chaudière 20.

A cet effet, la portion des deuxièmes moyens de communication disposés au regard de l'extérieur du logement, est agencée de manière à pouvoir être connectée de manière étanche avec des conduites d'eau.

Par ailleurs, la portion des moyens de communication disposée au regard de l'intérieur du logement forme un organe femelle 11a, 11b complémentaire d'un organe mâle 21a, 21b et apte à coopérer avec ce dernier pour former une liaison étanche et mécaniquement stable entre la chaudière 20 et le support 10.

L'ensemble est agencé de manière à ce que lorsque la chaudière 20 est tournée par rapport au support 10 dans un sens dit d'encliquetage opposé au sens de désencliquetage, les organes mâles 21a, 21b soient respectivement disposés au regard d'un organe femelle 11a, 11b et puissent coopérer avec ces derniers pour établir une communication fluidique entre la chambre de chauffage et les circuits d'entrée et de sortie connectés aux deuxièmes moyens de communication.

Pour assurer une coopération étanche entre les premiers et les deuxièmes moyens de communication, on prévoit de manière préférentielle que les organes femelles 11a, 11b forment un alésage et que les organes mâles 21a, 21b forment un cylindre creux apte à pénétrer dans les organes femelles 11a, 11b. Par ailleurs, on pourra prévoir sur chaque organe mâle 21a, 21b une gorge 22 destinée à accueillir un joint torique.

La chaudière 20 est agencée de manière à pouvoir tourner par rapport au support 10 dans le sens d'encliquetage jusqu'à une position dite d'encliquetage dans laquelle au moins une face latérale 27 entre en butée avec l'une des deuxièmes surfaces formant le renfoncement 13 ou avec les organes femelles 11a, 11b. On peut alors prévoir que la position d'encliquetage soit définie par une butée portée dans l'élément femelle 14 et au contact de laquelle est destinée à rentrer l'extrémité de l'organe mâle 21a, 21b correspondant.

Cette position d'encliquetage est obtenue par emmanchement à force des premiers moyens de communication dans les deuxièmes moyens de communication.

Dans cette position, la face inférieure 25 de la chaudière 20 est en appui plan sur le fond 15 du support 10 et le couvercle 17 empêche toute sortie de la chaudière 20 hors du support 10 par déplacement vertical.

La face inférieure 25 de la chaudière 20 et les premiers moyens de communication coopèrent respectivement avec le fond 15 du support 10 et les deuxièmes moyens de communication pour assurer la mise en position et la solidarisation de la chaudière 20 sur le support 10. Dans cet exemple de réalisation, la face inférieure 25 de la chaudière 20, les premiers moyens de communication, le fond 15 du support 10 et les deuxièmes moyens de communication forment ainsi des moyens d'assemblage agencés de manière à permettre sélectivement la solidarisation et la désolidarisation de la chaudière 20 sur le support 10. Ainsi les moyens de communications participent à la solidarisation de la chaudière 20 sur le support 10.

Cette position d'encliquetage assure ainsi un maintien particulièrement stable et fiable de la chaudière 20 dans le support 10. Elle assure également un maintien particulièrement stable de la communication fluidique entre la chaudière 20 et les circuits d'arrivée et de sortie d'eau connectés à cette dernière.

Par ailleurs, cette stabilité est obtenue de manière particulièrement aisée. En effet, pour obtenir le montage de la chaudière 20, il suffit simplement d'effectuer les étapes suivantes :
- on dispose la face inférieure 25 de la chaudière 20 au droit de l'ouverture,
- on insère la chaudière 20 à travers l'ouverture 12 selon l'axe de support 10,
- on tourne la chaudière 20 selon cet axe dans le sens d'encliquetage jusqu'à ce que les premiers et les deuxièmes moyens de communication coopèrent mutuellement et soient emmanchés à force l'un dans l'autre.

Par ailleurs, le désassemblage de la chaudière 20 par rapport au support 10 est également obtenu d'une façon particulièrement aisée et nécessite simplement d'effectuer les étapes suivantes :
- on tourne la chaudière 20 selon l'axe de support 10 dans le sens de désencliquetage jusqu'à ce que la face supérieure 28 de la chaudière 20 soit disposée au droit de l'ouverture.
- on retire la chaudière 20 par translation verticale selon l'axe de support 10 à travers l'ouverture.

Ainsi l'assemblage et le désassemblage de la chaudière 20 sur le support 10 peuvent être effectués par l'utilisateur lui-même sans avoir recours à un spécialiste.

L'ensemble comporte également des premiers moyens de connexion 26 électrique portés par la chaudière 20 et des deuxièmes moyens de connexion électrique 16 portés par le support 10.

Les premiers moyens de connexion 26 comprennent un premier et un deuxième contacteur agencés de manière à être disposés respectivement au contact d'un premier et d'un deuxième contacteur portés par les deuxièmes moyens de connexion électrique 16 lorsque la chaudière 20 est en position d'encliquetage.

Avantageusement, les deuxièmes moyens de connexion électrique 16 sont disposés sur le fond 15 du support 10 et les premiers moyens de connexion sont disposés sur la face inférieure 25 de la chaudière 20.

Les premiers moyens de connexion 26 sont électriquement connectés à l'élément chauffant de la chaudière 20. Les deuxièmes moyens de connexion 16 sont destinés à être électriquement connecté, lors du fonctionnement, connectés à un circuit d'alimentation électrique. Ainsi, en position d'encliquetage la chaudière 20 est alimentée en électricité.

Par conséquent, l'invention permet d'assurer la stabilité mécanique, la communication fluidique ainsi que la connexion électrique de la chaudière 20 de manière particulièrement simple. Cet assemblage est amovible et est obtenue de manière particulièrement aisée et rapide, sans avoir recours à un outillage ou à des moyens d'assemblage rapportés tels que des vis et des écrous. La chaudière 20 peut donc être interchangée et permet de limiter l'immobilisation de l'ensemble de la machine. Avantageusement, cet ensemble selon l'invention permet de limiter les coûts de production et de maintenance de la machine.

Dans une variante de réalisation de ce mode de réalisation, on pourra prévoir que les moyens de guidage en rotation soient formés par un élément mâle 24 porté par le support 10 et par un élément femelle 14 porté par la chaudière 20.

Dans une variante du mode de réalisation présenté précédemment, on pourra prévoir un clapet pour obstruer l'ouverture.

Dans une variante du mode de réalisation précédemment décrit, on pourra prévoir que les deux organes mâles 21a, 21b soient portés par une même face latérale 27 de la chaudière 20. On pourra également prévoir que le support 10 ne comporte qu'un seul renfoncement 13 portant les deux organes femelles 11a, 11b.

Dans une variante du mode de réalisation précédemment décrit, on prévoit que les organes mâles 21a, 21b soient disposés sur la face inférieure 25 de la chaudière 20. On prévoit également et que les organes femelles 11a, 11b soient disposés au droit de l'ouverture 12 et placés respectivement au regard d'un organe mâle 21a, 21b lorsque la chaudière est située au droit de l'ouverture 12. L'ensemble comprend des moyens d'assemblage qui assurent un contact ferme et étanche entre les organes mâles 12a, 21b et femelles 11a, 11b. Ces moyens d'assemblage peuvent être formés par les organes mâles et femelles eux-mêmes. Ils peuvent également être formés par un dispositif d'encliquetage spécifique comprenant des gâchettes escamotables ou flexibles portées par le support et s'insérant de manière amovible dans une butée d'encliquetage formée par la chaudière 20 pour maintenir cette dernière en position par rapport au support 10. Une telle butée d'encliquetage peut être formée par un évidemment ou une protubérance spécifiques, ou encore par l'une des faces 25, 27, 28 de la chaudière 20. Dans un tel mode de réalisation, la chaudière 20 et le support 10 sont agencés de manière à ce que leur assemblage mutuel soit obtenu en effectuant les étapes suivantes :
- on dispose la face inférieure 25 de la chaudière 20 au droit d'une ouverture 12 pratiquée dans le support 10,
- on insère par translation la chaudière 20 à travers l'ouverture 12 jusqu'à ce qu'à ce que les moyens d'encliquetage assurent la solidarisation de la chaudière 20 sur le support 10 et un contact ferme entre les organes mâles 11a, 11b et les organes femelles 21a, 21b correspondant.

Cette variante a pour avantage que le montage et le démontage sont particulièrement simples.

Par ailleurs, on pourra prévoir des moyens de verrouillage agencés de manière à sélectivement empêcher et autoriser le désencliquetage de la chaudière 20 sur le support 10. Ces moyens de verrouillage sont, de manière préférée, disposés au niveau de l'ouverture 12 qu'ils permettent d'obstruer ou de laisser libre. Ces moyens de verrouillage peuvent être réalisés sous la forme d'un clapet ou d'un taquet, amovibles et montés en rotation ou en translation sur le support 10.

L'invention n'est pas limitée aux variantes de ce premier mode de réalisation précédent décrites à titre d'exemples illustratifs, mais s'étend notamment aux chaudières dans lesquelles l'axe de support 10 et l'axe de chaudière 20 ne sont pas verticaux lorsque la chaudière 20 est solidaire du support 10. En effet on peut prévoir que ces axes sont obliques ou horizontaux.

Le mouvement de translation s'effectue toujours selon la direction de l'axe de support 10. Le mouvement de rotation s'effectue autour d'un axe sensiblement parallèle à la direction de translation.

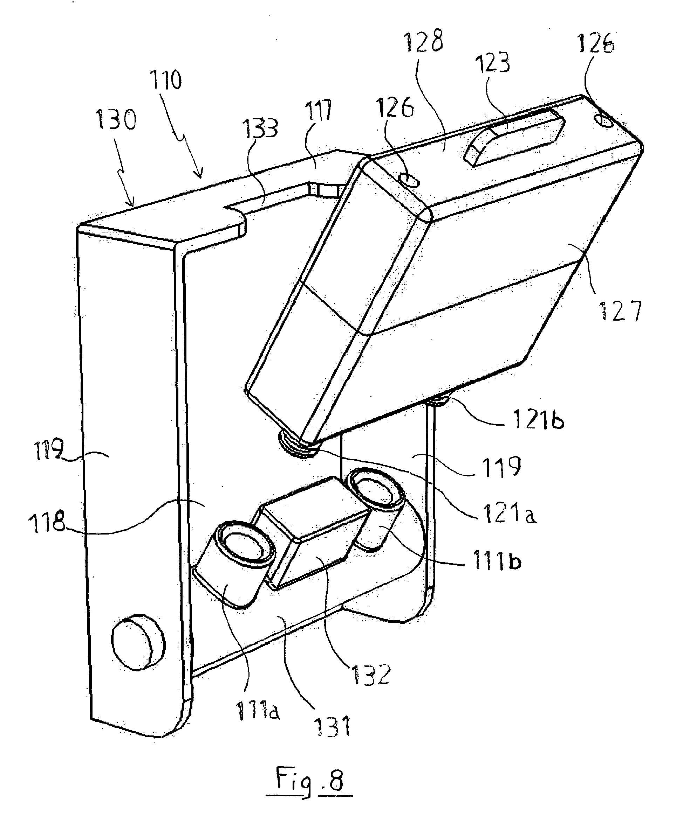

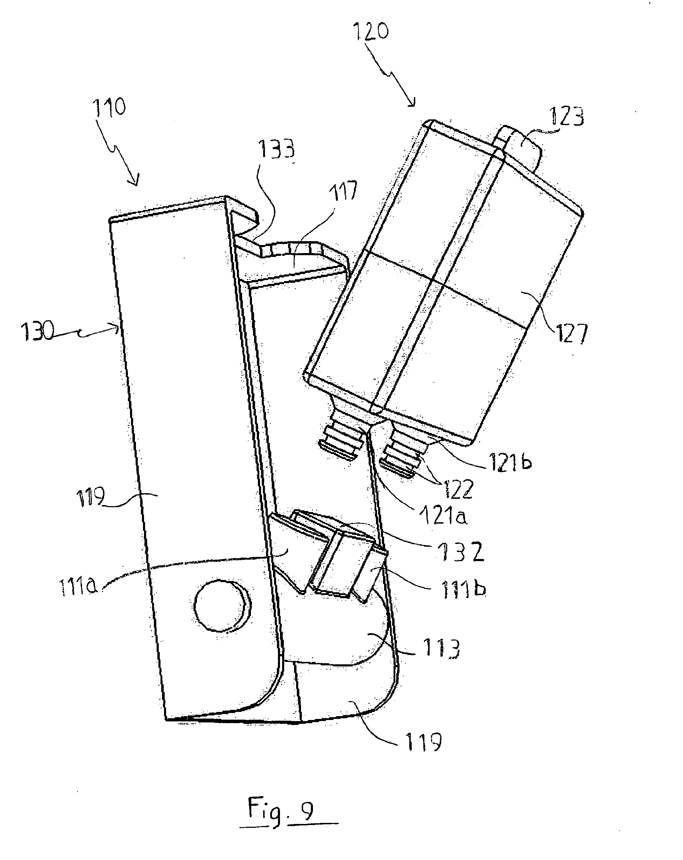

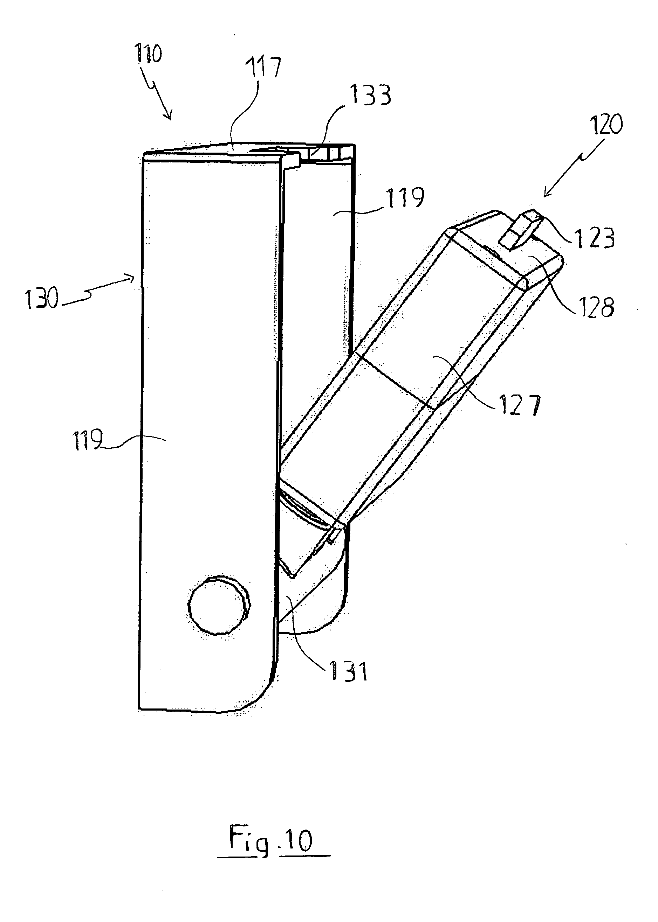

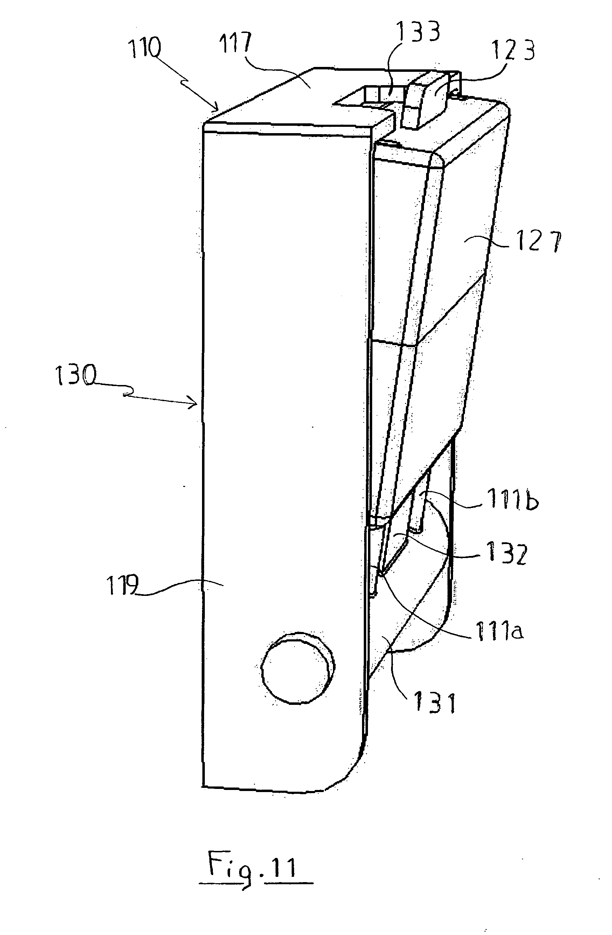

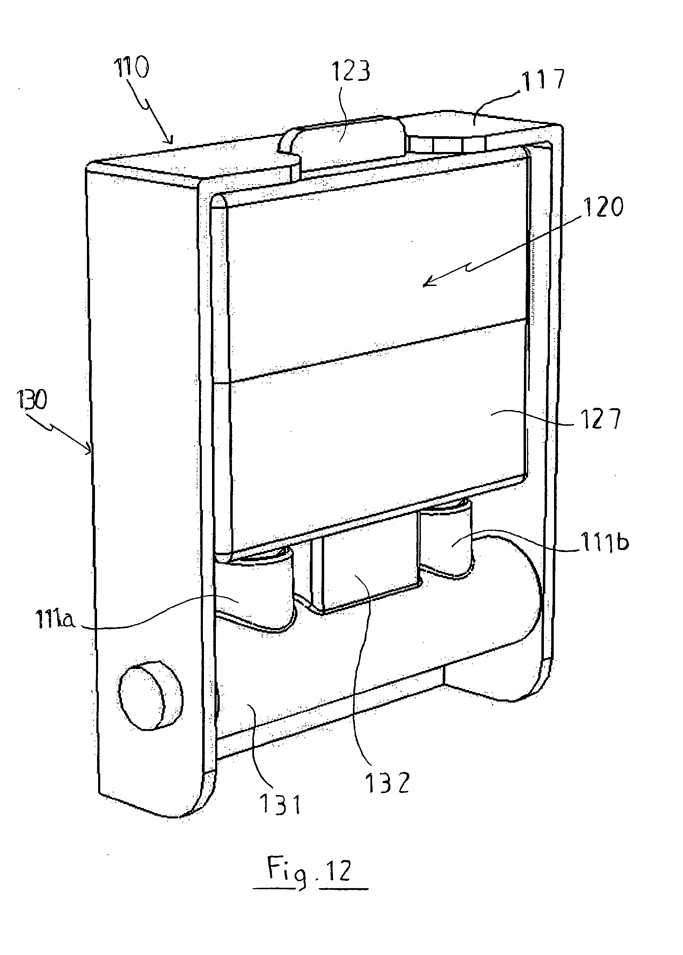

Un deuxième exemple de réalisation va être maintenant décrit en référence aux figures 8 à 12.

La chaudière 120, à l'exception de la disposition des premiers moyens de communication fluidique et des premiers moyens de communication électrique, présente sensiblement les mêmes caractéristiques que la chaudière 120 décrite dans le premiers exemple de réalisation de l'invention. Ainsi, la chaudière 120 comporte une face inférieure, une face supérieure 128 et des faces latérales 127 formant une chambre de chauffage. La chaudière 120 comporte sur sa face supérieure 128 une poignée 123 destinée à faciliter la préhension de la chaudière 120 par un utilisateur.

Les premiers moyens de communication sont disposés sur la face inférieure 125. Ils définissent deux organes mâles 121a, 121b formant chacun une protubérance et définissant un cylindre creux s'étendant depuis la face inférieure 125 dans une direction normale à cette dernière.

Les deux organes mâles 121a, 121b participent respectivement à l'arrivée et à la sortie de l'eau dans la chaudière 120. Avantageusement, ils sont disposés de manière à être significativement éloignés l'un de l'autre.

Le support 110 comporte un arbre 131 et un châssis 130 agencé de manière à faire office de palier pour l'arbre 131 monté en rotation sur le châssis 130 selon un axe horizontal désigné par la suite axe de rotation. L'arbre 131 est creux et définit une lumière s'étendant sur toute sa longueur.

L'arbre 131 porte des deuxièmes moyens de communication fluidique définissant deux organes femelles 111a, 111b. Chaque organe femelle 111a, 111b forme un cylindre creux s'étendant depuis l'arbre 131 dans une direction radiale à ce dernier.

Deux conduites logées en partie au moins dans la lumière de l'arbre 131 permettent respectivement d'assurer une communication fluidique entre un premier organe femelle 111a et un circuit d'arrivée d'eau, et un deuxième organe femelle 111b et un circuit d'évacuation d'eau.

Les premiers et les deuxièmes moyens de communication sont agencés de manière à ce que les organes mâles 121a, 121b puissent pénétrer dans les organes femelles 111a, 111b par emmanchement de la chaudière 120 sur l'arbre 131. Cette coopération des premiers et deuxièmes moyens de communication assure la mise en communication fluidique de la chaudière 120 avec les circuits d'arrivée et de sortie d'eau de la machine.

L'ensemble est agencé de manière à ce que la solidarisation de la chaudière 120 sur le support 110 s'effectue par translation de la chaudière 120 par rapport à l'arbre 131 dans une direction radiale à ce dernier. Ainsi, le mouvement de rotation s'effectue autour d'un axe sensiblement perpendiculaire à la direction selon laquelle est effectué le mouvement de translation. Avantageusement, cette translation s'effectue selon une direction inclinée dans un angle compris entre 30 et 60° par rapport à la verticale.

On peut prévoir sur l'arbre 131 un butée d'arrêt en translation 132 destinée à entrer au contact de la face inférieure 125 afin de stopper la translation de la chaudière 120 par rapport à l'arbre 131. Lorsque cette butée 132 entre au contact de la face inférieure 125, la chaudière 120 est dans une position dite d'encliquetage.

Dans cette position d'encliquetage, la chaudière 120 peut librement tourner autour de l'axe de rotation sur une portion angulaire donnée.

Le châssis 130 comporte une butée d'arrêt en rotation agencée de manière à stopper la rotation de la chaudière 120 lorsque celle-ci est disposée sensiblement à la verticale au dessus de l'arbre 131.

Dans cette position la chaudière 120 est assemblée sur le support.

Le châssis 130 comporte deux flasques sensiblement plats et verticaux prolongeant les paliers et s'étendant chacun selon un plan sensiblement perpendiculaire à l'axe de rotation. Le châssis 130 comprend également une paroi latérale plane et verticale s'étendant d'un flasque à l'autre. Il comporte également à son extrémité supérieure un couvercle 117 contigu à la paroi latérale et s'étendant dans un plan horizontal d'un flasque à l'autre.

Le couvercle 117 présente une échancrure 133 destinée à accueillir dans la position d'assemblage la poignée 123 de la chaudière 120.

La butée d'arrêt en rotation est constituée par l'échancrure 133 au contact de laquelle entre la poignée 123 lors de la rotation de la chaudière 120.

Selon un mode de réalisation, la butée d'arrêt en rotation est constituée par la paroi latérale du châssis 130 au contact de laquelle entre une face latérale 127 de la chaudière 120 lors de la rotation de cette dernière.

Les dimensions respectives du support 110 et de la chaudière 120 sont choisies de manière à ce qu'en position d'assemblage le couvercle 117 fasse office de butée d'arrêt en translation empêchant tout retrait ou désengagement des organes mâles 121a, 121b par rapport aux organes femelles 111a, 111b. Le déplacement de la chaudière 120 par rapport à l'arbre 131 est stoppé dès que la face supérieure 128 entre au contact du couvercle 117.

Ainsi même si la pression de l'eau circulant entre la chaudière 120 et les circuits d'arrivée et d'évacuation d'eau exerce une force significative tendant à rompre l'encliquetage de la chaudière 120 sur l'arbre 131, tout risque de désengagement entre ces deux derniers éléments est supprimé par l'agencement du couvercle 117.

Cet exemple de réalisation offre une grande stabilité mécanique ainsi qu'une grande étanchéité de la liaison fluidique. Par ailleurs, il permet un assemblage et un désassemblage particulièrement simples et rapides de la chaudière 120 par rapport au support 110.

L'ensemble comprend des premiers moyens de connexion électrique 126 disposés sur la face inférieure 125 et des deuxièmes moyens de connexion 116 électrique disposés sur la butée d'arrêt en translation 132 de manière à entrer au contact des premiers moyens de connexion 126 lorsque la chaudière 120 est encliquetée sur l'arbre 131. Les deuxièmes moyens de connexion 116 sont destinés à être électriquement reliés à un circuit d'alimentation électrique par l'intermédiaire de fils ou de pistes électriques logés dans la lumière de l'arbre 131.

Dans une variante de réalisation, on pourra prévoir que les premiers moyens de connexion 126 soient disposés sur la face supérieure 128 de la chaudière 120 et que les deuxièmes moyens de connexion 116 soient disposés sur le couvercle 117 du support 110. Dans cette variante, la connexion électrique entre la chaudière 120 et la source d'alimentation est établie lorsque la chaudière 120 est en position d'assemblage.

Dans une variante de réalisation, on pourra prévoir que les deuxièmes moyens de connexion 116 soient disposés sur la paroi latérale du support 110 et que les premiers moyens de connexion 126 soient sur la face latérale 127 disposée au regard de la paroi latérale lorsque la chaudière 120 est en position d'assemblage.

Ainsi, le montage de la chaudière 120 sur le support 110 s'effectue en procédant aux étapes suivantes :
- on incline la chaudière 120 d'un angle compris entre 20 et 70 degrés selon un axe horizontal coïncidant sensiblement avec l'axe de rotation de l'arbre 131, de manière à disposer chaque organe mâle au regard d'un organe femelle,
- on fait translater la chaudière 120 par rapport au support 110 de manière à entraîner la coopération des premiers et des deuxièmes moyens de communication,
- on rabat la chaudière 120 sur le châssis 130 en la faisant tourner vers ce dernier autour de l'axe de rotation jusqu'à ce que la chaudière 120 entre en butée avec la butée d'arrêt en rotation.

Ainsi, cet exemple de réalisation permet d'assurer une solidarisation de la chaudière 120 sur le support, une mise en communication fluidique de la chaudière 120 avec les circuits d'arrivée et d'évacuation de l'eau et une connexion électrique de la chaudière 120 à une source d'alimentation, en effectuant des étapes simples, rapides et ne nécessitant ni outillage, ni élément d'assemblage rapporté.

La chaudière 120 et les premiers moyens de communication 126 coopèrent respectivement avec la paroi latérale du support 110 et les deuxièmes moyens de communication 116 pour assurer la mise en position et la solidarisation de la chaudière 120 sur le support 110. Dans cet exemple de réalisation, la chaudière 120, les premiers moyens de communication 126, la paroi latérale du support 110 et les deuxièmes moyens de communication 116 forment ainsi des moyens d'assemblage agencés de manière à permettre sélectivement la solidarisation et la désolidarisation de la chaudière 120 sur le support 110. Ainsi les moyens de communications participent à la solidarisation de la chaudière 120 sur le support 110.

Dans une variante de ce deuxième exemple de réalisation qui vient d'être décrit, les fils électriques et les conduites d'eau sont portés dans une ou plusieurs rainures effectuées dans l'arbre 131.

L'invention n'est pas limitée aux variantes de ce deuxième mode de réalisation précédent décrites à titre d'exemples illustratifs, mais s'étend notamment aux chaudières dans lesquelles l'axe de rotation n'est pas horizontal mais est incliné ou vertical.

Le mouvement de translation s'effectue toujours selon une direction sensiblement radiale à l'axe de rotation. Ainsi, le mouvement de rotation s'effectue autour d'un axe sensiblement perpendiculaire à la direction selon laquelle est effectué le mouvement de translation.

Dans une variante, on prévoit que le support 110 comporte des moyens de verrouillage aptes à permettre sélectivement le verrouillage et le déverrouillage de la chaudière 120 sur le support 110 en position d'assemblage. Ces moyens de verrouillage peuvent notamment comprendre une goupille faisant office de butée d'arrêt en rotation pour la chaudière 120.

Avantageusement, l'ensemble est agencé de manière à ce que le débattement angulaire de la chaudière 120 nécessaire au montage et au démontage de cette dernière sur le support 110 soit compris entre 30 et 60°.

### REFERENCES

### 1^{er} exemple de réalisation

- 10.: Support
- 11a.: Organe femelle
- 11b.: Organe femelle
- 12.: Ouverture
- 13.: Renfoncement
- 14.: Elément femelle
- 15.: Fond
- 16.: Deuxièmes moyens de connexion électrique
- 17.: Couvercle
- 18.: Paroi latérale
- 20.: Chaudière
- 21 a.: Organe mâle
- 21 b.: Organe mâle
- 22.: Gorge
- 23.: Poignée
- 24.: Elément mâle
- 25.: Face inférieure
- 26.: Premiers moyens de connexion
- 27.: Face latérale
- 28.: Face supérieure

### 2^{ème} exemple de réalisation

- 110.: Support
- 111a.: Organe femelle
- 111b.: Organe femelle
- 112.: Ouverture
- 113.: Renfoncement
- 115.: Fond
- 116.: Deuxièmes moyens de connexion électrique
- 117.: Couvercle
- 118.: Paroi latérale
- 119.: Flasque
- 120.: Chaudière
- 121 a.: Organe mâle
- 121 b.: Organe mâle
- 122.: Gorge
- 123.: Poignée
- 125.: Face inférieure
- 126.: Premiers moyens de connexion
- 127.: Face latérale
- 128.: Face supérieure
- 130.: Châssis
- 131.: Arbre
- 132.: Butée d'arrêt en translation
- 133.: Echancrure

## Revendications

1. Ensemble pour machine de préparation de boissons par infusion d'un liquide comportant
• un support (10),
• une chaudière (20), destinée à chauffer le liquide en vue de la production de boissons,
• des moyens d'assemblage (21a, 21b, 25) agencés de manière à permettre sélectivement une solidarisation et une désolidarisation amovible de la chaudière sur le support (10)
• des premiers moyens de communication (21a, 21b) fluidique solidaires de la chaudière et des deuxièmes moyens de communication fluidique (11a, 11b) solidaires d'un circuit d'arrivée de fluide et/ou d'un circuit de sortie de fluide, les premiers (21a, 21b) et deuxièmes (11a, 11b) moyens de communication fluidique étant agencés pour coopérer mutuellement afin d'assurer une communication fluidique entre la chaudière (20) et un circuit d'arrivée de fluide et/ou un circuit de sortie de fluide,
**caractérisé en ce qu'**il est agencé de manière à ce que la solidarisation et la désolidarisation entre la chaudière (20) et le support (10) respectivement entraîne et supprime la coopération mutuelle des premiers moyens de communication fluidique (21a, 21b) avec les deuxièmes (11a, 11b) moyens de communication fluidique, **en ce qu'**il comprend des premiers (26) et des deuxièmes moyens de connexion électrique (16) liés respectivement à la chaudière (20) et à une source d'alimentation électrique et aptes à coopérer mutuellement pour alimenter la chaudière (20) en électricité, et **en ce que** la solidarisation et la désolidarisation de la chaudière (20) sur le support (10) respectivement entraîne et supprime la coopération entre les premiers (26) et les deuxièmes moyens de connexion électrique (16).

2. Ensemble selon la revendication précédente dans lequel les premiers moyens de connexion (26) comprennent un premier et un deuxième contacteur agencés de manière à être disposés respectivement au contact d'un premier et d'un deuxième contacteur portés par les deuxièmes moyens de connexion électrique (16) lorsque la chaudière (20) est dans une position d'encliquetage de la chaudière sur le support.

3. Ensemble selon la revendication précédente, dans lequel la position d'encliquetage est obtenue par emmanchement à force des premiers moyens de communication dans les deuxièmes moyens de communication.

4. Ensemble selon l'une quelconque des revendications précédentes, dans lequel les premiers moyens de communication fluidique comprennent des organes mâles (21 a, 21 b) portés par la chaudière et les deuxièmes moyens de communication fluidique comprennent des organes femelles (11 a, 11 b) portés par le support (10), dans lequel les moyens d'assemblage assurent un contact ferme et étanche entre les organes mâles (21 a, 21 b) et femelles (11a, 11 b), les moyens d'assemblage étant formés par les organes mâles et femelles eux-mêmes.

5. Ensemble selon l'une quelconque des revendications 1 à 3, dans lequel les premiers moyens de communication fluidique comprennent des organes mâles (21a, 21b) portés par la chaudière et les deuxièmes moyens de communication fluidique comprennent des organes femelles (11a, 11b) portés par le support (10), dans lequel les moyens d'assemblage assurent un contact ferme et étanche entre les organes mâles (21a, 21b) et femelles (11a, 11b), les moyens d'assemblage étant formés par un dispositif d'encliquetage spécifique comprenant des gâchettes escamotables ou flexibles portées par le support et s'insérant de manière amovible dans une butée d'encliquetage formée par la chaudière (20) pour maintenir cette dernière en position par rapport au support (10).

6. Ensemble selon l'une quelconque des revendications précédentes, **caractérisé en ce que** les premiers moyens de communication fluidique comprennent des organes mâles (21 a, 21 b) portés par la chaudière et les deuxièmes moyens de communication fluidique comprennent des organes femelles (11a, 11b) portés par le support (10), **en ce que** l'ensemble comprend des moyens d'encliquetage qui assurent un contact ferme et étanche entre les organes mâles (12a, 21b) et femelles (11a, 11b) et **en ce que** la chaudière (20) et le support (10) sont agencés de manière à ce que leur assemblage mutuel soit obtenu en effectuant les étapes suivantes :
- on dispose une face inférieure (25) de la chaudière (20) au droit d'une ouverture (12) pratiquée dans le support (10),
- on insère par translation la chaudière (20) à travers l'ouverture (12) jusqu'à ce qu'à ce que les moyens d'encliquetage assurent la solidarisation de la chaudière (20) sur le support (10) et un contact ferme entre les organes mâles (11a, 11b) et les organes femelles (21a, 21b) correspondant.

7. Ensemble selon l'une quelconque des revendications 1 à 3, **caractérisé en ce qu'**il est agencé de manière à ce que ladite solidarisation entre la chaudière (20) et le support (10) soit obtenue en imposant à la chaudière (20) un premier mouvement de translation par rapport au support (10), puis un deuxième mouvement de rotation par rapport au support (10).

8. Ensemble selon la revendication précédente, **caractérisé en ce qu'**il est agencé de manière à ce que le mouvement de rotation s'effectue autour d'un axe sensiblement parallèle au mouvement de translation.

9. Ensemble selon la revendication précédente, dans lequel le support présente un fond, dans lequel les deuxièmes moyens de connexion électrique (16) sont disposés sur le fond (15) du support 10 et dans lequel les premiers moyens de connexion sont disposés sur une face inférieure (25) de la chaudière (20).

10. Ensemble selon la revendication 7, **caractérisé en ce qu'**il est agencé de manière à ce que le mouvement de rotation s'effectue autour d'un axe sensiblement perpendiculaire au mouvement de translation.

11. Ensemble selon la revendication précédente, **caractérisé en ce que** le support comprend un châssis (130) et un arbre (131) monté à rotation par rapport au châssis (130) et agencé de manière à être solidarisé de manière amovible avec la chaudière (120).

12. Ensemble selon la revendication précédente, **caractérisé en ce que** les deuxièmes moyens de communication fluidique sont portés par l'arbre (131), et **en ce que** l'arbre (131) accueille une partie du circuit d'arrivée et/ou de sortie d'eau.

13. Ensemble selon la revendication précédente, **caractérisé en ce que** le support (110) est agencé de manière à empêcher toute suppression de la communication entre les premiers (121a, 121b) et les deuxièmes (111a, 111b) moyens de communication, lorsque la solidarisation entre la chaudière (120) et le support (110) est établie.

14. Chaudière (20) pour machine de préparation de boissons par infusion d'un liquide, comportant
• des moyens d'assemblage (21a ,21b, 25) agencés pour permettre une solidarisation amovible entre la chaudière (20) et un support (10) fixé à la machine,
• des premiers moyens de communication fluidique agencés pour permettre une communication fluidique entre la chaudière (20) et un circuit d'arrivée de fluide et/ou un circuit de sortie de fluide porté par la machine,
**caractérisé en ce qu'**elle est agencée de manière à ce que sa solidarisation et sa désolidarisation sur la machine respectivement entraîne et supprime ladite communication fluidique et en **en ce qu'**elle comprend des premiers (26) moyens de connexion électrique et aptes à coopérer avec des deuxièmes moyens de connexion électrique liés à une source d'alimentation électrique pour alimenter la chaudière (20) en électricité, et **en ce que** la solidarisation et la désolidarisation de la chaudière (20) sur le support (10) respectivement entraîne et supprime la coopération entre les premiers (26) et les deuxièmes moyens de connexion électrique (16).

15. Machine de production de boissons comportant un ensemble selon l'une quelconque des revendications 1 à 14.

## Patentansprüche

1. Struktur für eine Maschine zur Zubereitung von Getränken per Aufguss einer Flüssigkeit, umfassend:
- einen Träger (10),
- eine Heizvorrichtung (20), die zum Heizen einer Flüssigkeit zwecks Zubereitung von Getränken bestimmt ist,
- Montagemittel (21 a, 21 b, 25), die derart angeordnet sind, dass eine selektive Befestigung und ein abnehmbares Loslösen der Heizvorrichtung auf dem Träger (10) zugelassen wird
- erste fluidische, mit der Heizvorrichtung fest verbundene Kommunikationsmittel (21a, 21 b) und zweite fluidische, mit einem Einlasskreislauf der Flüssigkeit und / oder einem Auslasskreislauf der Flüssigkeit fest verbundene Kommunikationsmittel (11a, 11b), wobei die ersten und (21a, 21b) und zweiten (11a, 11b) fluidischen Kommunikationsmittel angeordnet sind, um miteinander zusammenzuwirken, um eine fluidische Kommunikation zwischen der Heizvorrichtung (20) und einem Einlasskreislauf der Flüssigkeit und / oder einem Auslasskreislauf der Flüssigkeit zu gewährleisten,
**dadurch gekennzeichnet, dass** sie derart angeordnet ist, dass die feste Verbindung und das Loslösen zwischen der Heizvorrichtung (20) und dem Träger (10) jeweils das gegenseitige Zusammenwirken der ersten fluidischen Kommunikationsmittel (21 a, 21 b) mit den zweiten fluidischen Kommunikationsmitteln (11a, 11b) nach sich zieht und unterdrückt, dass sie erste (26) und zweite elektrische Anschlussmittel (16) umfasst, die jeweils mit der Heizvorrichtung (20) und einer elektrischen Versorgungsquelle verbunden und geeignet sind, miteinander zusammenzuwirken, um die Heizvorrichtung (20) mit Strom zu versorgen und dass die feste Verbindung und das Loslösen der Heizvorrichtung (20) auf dem Träger (10) jeweils das Zusammenwirken zwischen den ersten (26) und den zweiten elektrischen Anschlussmitteln (16) nach sich zieht und unterdrückt.

2. Struktur gemäß dem voranstehenden Anspruch, in dem die ersten Anschlussmittel (26) einen ersten und einen zweiten Kontaktgeber umfassen, die derart angeordnet sind, dass sie jeweils in Kontakt mit einem ersten und einem zweiten Kontaktgeber eingerichtet sind, die von den zweiten elektrischen Anschlussmitteln (16) getragen werden, wenn die Heizvorrichtung (20) sich in einer Einrastposition der Heizvorrichtung auf dem Träger befindet.

3. Struktur gemäß dem voranstehenden Anspruch, in der die Einrastposition per kraftschlüssigem Aufpfropfen der ersten Kommunikationsmittel in den zweiten Kommunikationsmitteln erhalten wird.

4. Struktur gemäß einem der voranstehenden Ansprüche, in der die ersten fluidischen Kommunikationsmittel männliche Organe (21 a, 21 b) umfassen, die von der Heizvorrichtung getragen werden, und die zweiten fluidischen Kommunikationsmittel weibliche Organe (11 a, 11b) umfassen, die vom Träger (10) getragen werden, in dem die Montagemittel einen geschlossenen und abgedichteten Kontakt zwischen den männlichen (21a, 21 b) und weiblichen (11a, 11b) Organen gewährleisten, wobei die Montagemittel durch die männlichen und weiblichen Organe selbst gebildet werden.

5. Struktur gemäß Anspruch 1 bis 3, in der die ersten fluidischen Kommunikationsmittel männliche Organe (21 a, 21 b) umfassen, die von der Heizvorrichtung getragen werden, und die zweiten fluidischen Kommunikationsmittel weibliche Organe (11a, 11b) umfassen, die vom Träger (10) getragen werden, in der der die Montagemittel einen geschlossenen und abgedichteten Kontakt zwischen den männlichen (21a, 21 b) und weiblichen (11a, 11b) Organen gewährleisten, wobei die Montagemittel durch eine spezifische Einrastvorrichtung geformt werden, die versenkbare oder flexible Drücker umfasst, die vom Träger getragen werden und abnehmbar in einen Einrastanschlag eingefügt werden, der durch die Heizvorrichtung (20) geformt wird, um diese im Verhältnis zum Träger (10) in Position zu halten.

6. Struktur gemäß einem der voranstehenden Ansprüche, **dadurch gekennzeichnet, dass** die ersten fluidischen Kommunikationsmittel männliche Organe (21 a, 21 b) umfassen, die von der Heizvorrichtung getragen werden, und die zweiten fluidischen Kommunikationsmittel weibliche Organe (11a, 11b) umfassen, die vom Träger (10) getragen werden, dass die Struktur Einrastmittel umfasst, die einen geschlossenen und abgedichteten Kontakt zwischen den männlichen (12a, 21b) und weiblichen (11a, 11b) Organen gewährleisten und dass die Heizvorrichtung (20) und der Träger (10) derart angeordnet sind, dass ihre gegenseitige Montage durch Durchführen der folgenden Stufen erhalten wird:
- Es wird eine innere Seite (25) der Heizvorrichtung (20) gegenüber einer in dem Träger (10) praktizierten Öffnung (12) angeordnet,
- Die Heizvorrichtung (20) wird per Translation durch die Öffnung (12) eingefügt, bis die Einrastmittel die feste Befestigung der Heizvorrichtung (20) auf dem Träger (10) und einen entsprechenden geschlossenen Kontakt zwischen den männlichen Organen (11a, 11b) und den weiblichen Organen (21 a, 21 b) gewährleisten.

7. Struktur gemäß Anspruch 1 bis 3, **dadurch gekennzeichnet, dass** sie derart angeordnet ist, dass die genannte feste Befestigung zwischen der Heizvorrichtung (20) und dem Träger (10) durch Aufzwingen einer ersten Translationsbewegung der Heizvorrichtung (20) im Verhältnis zum Träger (10) und dann einer zweiten Rotationsbewegung im Verhältnis zum Träger (10) erhalten wird.

8. Struktur gemäß dem voranstehenden Anspruch, **dadurch gekennzeichnet, dass** sie derart angeordnet ist, dass die Rotationsbewegung rund um eine zur Translationsbewegung deutlich parallele Achse erfolgt.

9. Struktur gemäß dem voranstehenden Anspruch, in der der Träger einen Boden aufweist, in dem die zweiten elektrischen Anschlussmittel (16) auf dem Boden (15) des Trägers 10 angeordnet sind und in der die ersten Anschlussmittel auf einer inneren Seite (25) der Heizvorrichtung (20) angeordnet sind.

10. Struktur gemäß Anspruch 7, **dadurch gekennzeichnet, dass** sie derart angeordnet ist, dass die Rotationsbewegung rund um eine zur Translationsbewegung deutlich lotrechte Achse erfolgt.

11. Struktur gemäß dem voranstehenden Anspruch, **dadurch gekennzeichnet, dass** der Träger ein Gehäuse (130) und eine Welle (131) umfasst, die im Verhältnis zum Gehäuse (130) in Rotation montiert und derart angeordnet ist, dass sie abnehmbar mit der Heizvorrichtung (120) fest verbunden ist.

12. Struktur gemäß dem voranstehenden Anspruch, **dadurch gekennzeichnet, dass** die zweiten fluidischen Kommunikationsmittel von der Welle (131) getragen werden und dass die Welle (131) einen Teil des Einlasskreislaufs und / oder Wasserauslasskreislaufs aufnimmt.

13. Struktur gemäß dem voranstehenden Anspruch, **dadurch gekennzeichnet, dass** der Träger (110) derart angeordnet ist, dass jede Unterdrückung der Kommunikation zwischen den ersten (121 a, 121 b) und den zweiten (111 a, 111 b) Kommunikationsmitteln verhindert wird, wenn die feste Befestigung zwischen der Heizvorrichtung (120) und dem Träger (110) hergestellt ist.

14. Heizvorrichtung (20) für eine Maschine zur Zubereitung von Getränken per Aufguss einer Flüssigkeit, umfassend:
- Montagemittel (21a, 21b, 25), die angeordnet sind, um eine abnehmbare feste Befestigung zwischen der Heizvorrichtung (20) und einem an der Maschine befestigten Träger (10) zu erlauben,
- erste fluidische Kommunikationsmittel, die angeordnet sind, um eine fluidische Kommunikation zwischen der Heizvorrichtung (20) und einem Einlasskreislauf der Flüssigkeit und / oder einem Auslasskreislauf der Flüssigkeit, der von der Maschine getragen wird, zu erlauben,
**dadurch gekennzeichnet, dass** sie derart angeordnet ist, dass ihre feste Befestigung und ihr Loslösen auf der Maschine jeweils die genannte fluidische Kommunikation nach sich zieht und unterdrückt und dass sie erste (26) elektrische Anschlussmittel umfasst, die geeignet sind, mit zweiten elektrischen Anschlussmitteln zusammenzuwirken, die mit einer elektrischen Versorgungsquelle verbunden sind, um die Heizvorrichtung (20) mit Strom zu versorgen, und dass die feste Befestigung und das Loslösen der Heizvorrichtung (20) auf dem Träger (10) jeweils das Zusammenwirken zwischen den ersten (26) und den zweiten elektrischen Anschlussmitteln (16) nach sich zieht und unterdrückt.

15. Maschine zur Zubereitung von Getränken, umfassend eine Struktur gemäß Anspruch 1 bis 14.

## Claims

1. An assembly for a beverage-preparation machine by infusing a liquid comprising
. a support (10),
. a boiler (20) intended to heat the liquid for the production of beverages,
. assembling means (21a, 21b, 25) so arranged as to selectively enable a removable uniting and disuniting of the boiler to/from the support (10)
. first fluidic communication means (21 a, 21 b) made integral with the boiler and second fluidic communication means (11 a, 11 b) made integral with a fluid inlet circuit and/or a fluid outlet circuit, with the first (21 a, 21 b) and the second (11 a, 11 b) fluidic communication means being so arranged as to mutually cooperate in order to provide a fluidic communication between the boiler (20) and a fluid inlet circuit and/or a fluid outlet circuit,
**characterized in that** it is so arranged that the uniting and the disuniting between the boiler (20) and the support (10) respectively causes and eliminates the mutual cooperation of the first fluidic communication means (21 a, 21 b) with the second fluidic communication means (11 a, 11 b), **in that** it comprises first (26) and second electric connection means (16) respectively linked to the boiler (20) and to an electric power supply and able to mutually cooperate in order to supply the boiler (20) with electricity, and **in that** the uniting and the disuniting of the boiler (20) to/from the support (10) respectively causes and eliminates the cooperation between the first (26) and the second electric connection means (16).

2. An assembly according to the preceding claim, wherein the first connection means (26) comprise a first and a second contactor so arranged as to be respectively positioned in contact with a first and a second contactor carried by the second electric connection means (16) when the boiler (20) is in the locked position of the boiler on the support.

3. An assembly according to the preceding claim, wherein the locked position is obtained by press fitting the first communication means into the second communication means.

4. An assembly according to any one of the preceding claims, wherein the first fluidic communication means comprise male members (21 a, 21 b) carried by the boiler and the second fluidic communication means comprise female members (11 a, 11 b) carried by the support (10), wherein the assembling means provide a rigid and tight contact between the male (21 a, 21 b) and female (11 a, 11 b) members, with the assembling means being formed by the male and female members proper.

5. An assembly according to any one of claims 1 to 3, wherein the first fluidic communication means comprise male members (21 a, 21 b) carried by the boiler and the second fluidic communication means comprise female members (11a, 11 b) carried by the support (10), wherein the assembling means provide a rigid and tight contact between the male (21 a, 21 b) and female (11 a, 11 b) members, with the assembling means being formed by a specific locking device comprising folding or flexible triggers carried by the support and removeably inserted into a locking stop formed by the boiler (20) in order to hold the latter in position relative to the support (10).

6. An assembly according to any one of the preceding claims, **characterized in that** the first fluidic communication means comprise male members (21 a, 21b) carried by the boiler and the second fluidic communication means comprise female members (11 a, 11 b) carried by the support (10), **in that** the assembly comprises locking means which provide a rigid and tight contact between the male (12a, 21 b) and female (11 a, 11 b) members, and **in that** the boiler (20) and the support (10) are so arranged that their mutual assembling is obtained by executing the following steps:
. a lower face (25) of the boiler (20) is positioned opposite an opening (12) provided in the support (10),
. the boiler (20) is inserted by translation through the opening (12) until the locking means provide the uniting of the boiler (20) on the support (10) and a rigid contact between the male members (11a, 11 b) and the matching female members (21 a, 21 b).

7. An assembly according to any one of claims 1 to 3, **characterized in that** it is so arranged that said uniting between the boiler (20) and the support (10) is obtained by imparting the boiler (20) a first translational motion relative to the support (10), and then a second rotating motion relative to the support (10).

8. An assembly according to the preceding claim, **characterized in that** it is so arranged that the rotating motion is executed about an axis substantially parallel to the translation motion.

9. An assembly according to the preceding claim, wherein the support has a bottom, wherein the second electric connection means (16) are positioned on the bottom (15) of the support (10) and wherein the first connection means are positioned on an inner face (25) of the boiler (20).

10. An assembly according to claim 7, **characterized in that** it is so arranged that the rotating motion is executed about an axis substantially perpendicular to the translational motion.

11. An assembly according to the preceding claim, **characterized in that** the support comprises a frame (130) and a shaft (131) mounted to rotate relative to the frame (130) and so arranged as to be removeably connected with the boiler (120).

12. An assembly according to the preceding claim, **characterized in that** the second fluidic communication means are carried by a shaft (131), and **in that** the shaft (131) houses a portion of the water inlet and/or outlet circuit.

13. An assembly according to the preceding claim, **characterized in that** the support (110) is so arranged as to prevent any elimination of the communication between the first (121a, 121b) and the second (111a, 111b) communication means, when the uniting between the boiler (120) and the support (110) is established.

14. A boiler (20) for a beverage-preparation machine by infusing a liquid comprising
. assembling means (21a, 21b, 25) so arranged as to enable a removable uniting between the boiler (20) and a support (10) attached to the machine,
. first fluidic communication means so arranged as to enable a fluidic communication between the boiler (20) and a fluid inlet circuit and/or a fluid outlet circuit carried by the machine,
**characterized in that** it is arranged so that the uniting and the disuniting thereof on the machine respectively causes and eliminates said fluidic communication and **in that** it includes first (26) electric connection means able to cooperate with second electric connection means linked to an electric power supply in order to supply the boiler (20) with electricity, and **in that** the uniting and disuniting of the boiler (20) to/from the support (10) respectively causes and eliminates the cooperation between the first (26) and the second electric connection means (16).

15. A beverage production machine comprising an assembly according to any one of claims 1 to 14.
